# DEMANDE DE BREVET EUROPEEN

(11) **EP 2 353 691 A1**
(43) Date de publication de la demande: **10.08.2011**
(21) Numéro de dépôt: 10193870.2
(22) Date de dépôt: 06.12.2010
(51) Int. Cl.: B01D 29/21

(54) **Elément filtrant à lèvre d'étanchéité destiné à un filtre à liquides**

(30) Priorité: 30.12.2009 FR 0959661
(71) Demandeur: FILTRAUTO, 78280 Guyancourt (FR)
(72) Inventeur: Oursin, Dominique, 92350, LE PLESSIS ROBINSON (FR); Vin, Sébastien, 78490, MERE (FR); Pigeau, Jean-Michel, 91220, BRETIGNY SUR ORGE (FR)
(74) Mandataire: Cabinet Plasseraud

(57) **Abrégé**

L'élément filtrant (1), destiné à un filtre pour liquide de moteur à combustion, comprend :
- un média filtrant (2) de forme annulaire qui s'étend autour d'un axe central (A) en définissant un volume intérieur (5) ; et
- au moins un flasque (3) monobloc en matière plastique comportant une portion radiale (3c) qui recouvre une extrémité axiale (2a) du média filtrant (2) et une portion d'étanchéité annulaire (35) reliée à la portion radiale.

La portion d'étanchéité (35) présente en section transversale une forme de U ouvert vers l'extérieur comportant une première branche (35a), une deuxième branche (35c) et une base (35b) reliant la première branche à la deuxième branche. La première branche (35a) et la deuxième branche (35c) sont globalement tubulaires et s'étendent suivant l'axe central (A), la portion d'étanchéité (35) étant reliée à la portion radiale (3c) par sa première branche (35a).

## Description

La présente invention se rapporte au domaine de la filtration de fluides, et concerne plus particulièrement les éléments filtrants équipant les filtres à liquides tels que huile ou carburant.

De façon connue en soi, les filtres à huile ou carburant comportent typiquement un boîtier externe délimitant un volume intérieur contenant l'élément filtrant. L'élément filtrant comprend essentiellement un média filtrant conformé de façon annulaire et peut comporter deux flasques d'extrémité pour le maintien du média filtrant dans sa conformation annulaire. Lorsque l'élément filtrant est disposé dans le boîtier, il sépare le volume intérieur de ce boîtier en un espace amont et un espace aval. Le boîtier présente respectivement une connexion d'entrée de fluide communiquant avec l'espace en amont du média filtrant dans le sens de circulation du fluide, et une connexion de sortie de fluide communiquant avec l'espace en aval du média filtrant.

La connexion de l'élément filtrant au boîtier externe doit être réalisée de manière étanche pour permettre la séparation entre la zone amont de circulation de fluide sale et la zone en aval où circule le fluide propre.

Il est connu, par exemple par le document DE 10 2004 015 398, de réaliser chacun des flasques de l'élément filtrant avec une lèvre d'étanchéité annulaire qui définit une zone d'étanchéité autour d'un passage central. Ainsi, la surface externe périphérique d'un organe de connexion rigide du boîtier peut s'engager de façon étanche avec la lèvre d'étanchéité par un simple mouvement de translation. L'organe de connexion du boîtier est typiquement un conduit qui permet, lorsqu'il coopère avec l'élément filtrant, soit de faire entrer un fluide à purifier dans le volume intérieur de l'élément filtrant, soit de faire circuler le fluide propre vers la sortie du filtre. L'extrémité du conduit peut être biseautée pour faciliter son passage à travers la lèvre d'étanchéité annulaire.

L'utilisation dans l'élément filtrant de flasques filtrant munis de lèvres d'étanchéité formées à même le flasque permet d'optimiser le coût de fabrication et rend l'obtention de l'étanchéité plus simple qu'avec un joint additionnel.

Des problèmes d'étanchéité peuvent être cependant rencontrés avec ce type de lèvre d'étanchéité, en particulier lorsqu'il existe une différence de pression du fluide de part et d'autre de l'élément filtrant. En effet une surpression d'un côté de la lèvre d'étanchéité peut causer un décollement de celle-ci.

Le document US 2005/0133433 A1 prévoit un joint à portion de contact tronconique qui présente des capacités d'adaptation aux différentiels de pression. Le joint se déforme grâce au pliage d'une portion annulaire externe à composante essentiellement radiale qui est distante à la fois de l'extrémité supérieure et de l'extrémité inférieure de la portion de contact tronconique. Lors de l'insertion de l'organe de connexion du boîtier, par l'effet de pliage de la portion annulaire externe, la portion de contact se conforme en portion cylindrique. En raison de sa forme particulière, avec des gorges opposées, la fabrication d'un tel joint requiert un système de moulage relativement complexe.

La présente invention a pour but de proposer un élément filtrant simple de fabrication et présentant une étanchéité fiable et peu sensible à la variation des conditions d'utilisation.

A cet effet, il est proposé selon l'invention un élément filtrant selon la revendication 1.

Grâce à ces dispositions, on obtient un élément filtrant avec une lèvre d'étanchéité dont le coût de fabrication est optimisé. Le flasque à portion d'étanchéité en forme de U est en outre aisé à démouler. La forme de U ouvert vers l'extérieur présente aussi un avantage en cas de surpression, l'excès de pression accentuant le placage de la lèvre contre le support tubulaire (organe de connexion rigide du boîtier de filtre) sur lequel l'élément filtrant est monté. L'agencement de la portion d'étanchéité dans le volume intérieur du média filtrant permet d'optimiser l'encombrement de l'élément filtrant et de l'ensemble du filtre à liquides *in fine.*

Dans divers modes de réalisation de l'élément filtrant selon l'invention, on peut éventuellement avoir recours en outre à l'une et/ou à l'autre des dispositions suivante :
- la portion d'étanchéité présente une lèvre d'étanchéité qui est agencée radialement vers l'intérieur par rapport à la portion radiale du flasque ;
- la portion d'étanchéité présente :
   o une surface interne qui définit une ouverture d'un passage à travers l'élément filtrant ; et
   o une surface externe délimitant une gorge annulaire ouverte suivant l'axe central et vers l'extérieur ;
- la surface interne de la portion d'étanchéité présente dans la deuxième branche un bourrelet annulaire qui comporte une surface d'étanchéité délimitant ladite ouverture (cette disposition facilite l'engagement avec le support tubulaire sur lequel l'élément filtrant est monté) ;
- l'épaisseur de la portion d'étanchéité au niveau du bourrelet annulaire correspond à une augmentation d'épaisseur comprise entre 20 et 50% par rapport au reste de la portion d'étanchéité ;
- l'épaisseur de la base de la portion d'étanchéité et la matière du flasque sont choisies pour rendre flexible ladite base, ce grâce à quoi la deuxième branche de la portion d'étanchéité est mobile axialement et radialement par rapport à la première branche ;
- l'élément filtrant comprend un tube central avec des ouvertures latérales, agencé dans ledit volume intérieur dans le prolongement de la portion d'étanchéité, ledit tube central étant directement fixé au flasque (l'utilisation d'un tel tube central est avantageuse pour supporter, par exemple à l'aide de nervures du tube, la face intérieure de média filtrant) ;
- le tube central présente un bourrelet annulaire qui fait saillie radialement vers l'extérieur et est engagé avec le flasque entre la base de la portion d'étanchéité et des organes de clipsage intégralement formés avec le flasque ;
- la première branche qui permet de relier la portion d'étanchéité à la portion radiale présente une épaisseur constante identique à l'épaisseur de la portion radiale ;
- le flasque est une pièce moulée qui comprend :
   o ladite portion radiale qui s'étend perpendiculairement à l'axe central du média filtrant, entre un bord interne et un bord externe, et forme le fond du flasque ;
   o une paroi interne tubulaire qui s'étend le long de ladite extrémité axiale du média filtrant recouverte par la portion radiale, depuis le bord interne de la portion radiale, cette paroi interne comprenant ladite deuxième branche de la portion d'étanchéité ; et
   o une paroi externe tubulaire qui s'étend le long de ladite extrémité axiale du média filtrant recouverte par la portion radiale, depuis le bord externe de la portion radiale.

D'autres caractéristiques et avantages de l'invention apparaîtront au cours de la description suivante de plusieurs modes de réalisation, donnés à titre d'exemples non limitatifs, en regard des dessins joints dans lesquels :
- la figure 1 est une vue en coupe longitudinale d'un élément filtrant dans un mode de réalisation conforme à l'invention ;
- la figure 2 montre plus en détail l'élément filtrant de la figure 1 ;
- la figure 3 est une vue de détail de la figure 2 ;
- la figure 4 est une vue de dessus de l'élément filtrant.

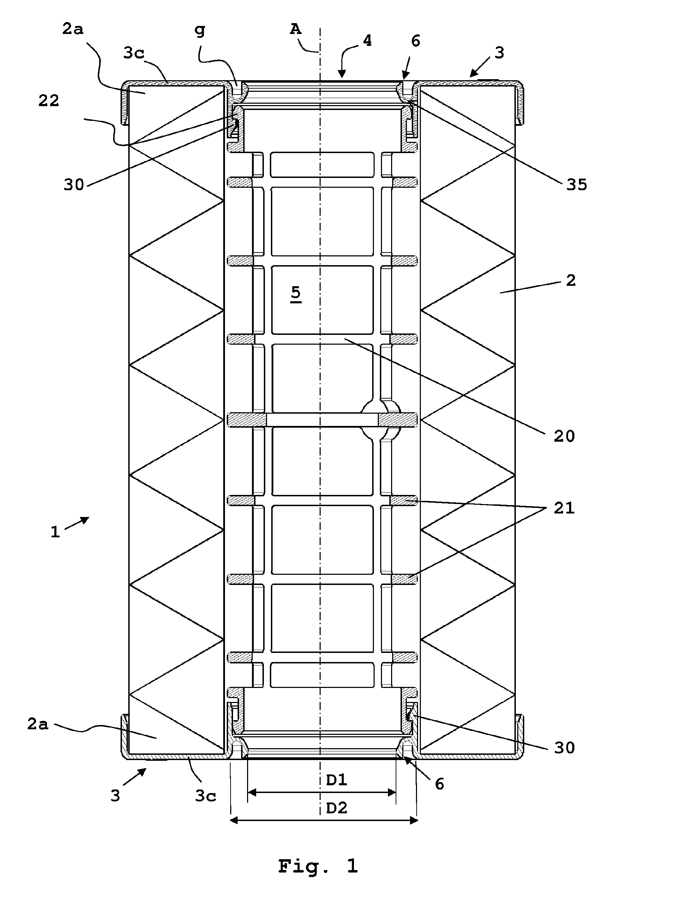

En référence à la figure 1, l'élément filtrant 1 selon l'invention comporte un média filtrant 2 de forme annulaire interposé et maintenu ici entre des flasques supérieur et inférieur 3. Le média filtrant 2 peut être plissé ou conformé suivant une autre géométrie conventionnelle et s'étend autour d'un axe central A. Dans l'exemple représenté, il s'agit d'un papier filtre judicieusement plissé de manière connue en soi. Les flasques 3 sont ici identiques et l'élément filtrant 1 présente une certaine symétrie à la fois par rapport à son axe central A (symétrie de révolution) et par rapport à un plan transversal médian perpendiculaire à l'axe central A. Une telle symétrie permet un positionnement correct de l'élément filtrant 1 sans risque d'erreur de connexion par inversion entre un dessus et un dessous différents. Dans ce cas chacun des flasques 3 présente une ouverture 4 utilisée pour le passage d'un liquide dans le volume intérieur 5 qui est défini par le média filtrant 2 de forme annulaire. Ce liquide peut être en l'occurrence :
- soit le liquide sale à filtrer qui pénètre à travers l'ouverture 4 dans une zone en amont de la filtration,
- soit le liquide propre qui doit ressortir du filtre depuis d'une zone en aval de la filtration.

Comme on le verra ci-après, l'exemple représenté à la figure 1 est particulièrement adapté pour le deuxième cas.

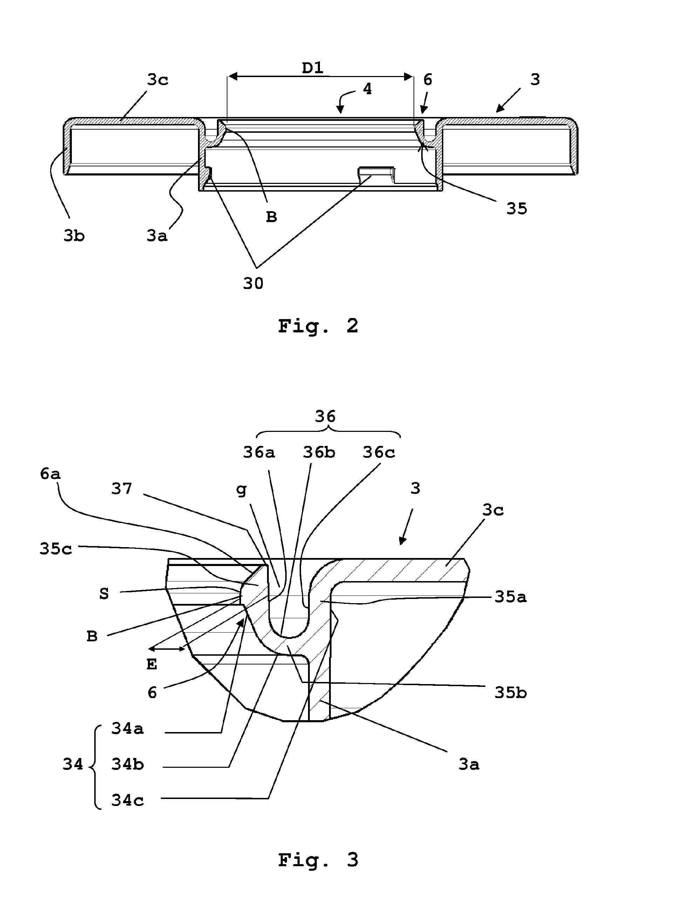

Dans l'exemple représenté, chacun des flasques 3 est formé d'une pièce en matière plastique permettant le moulage du flasque (matière thermoplastique comme par exemple le polyamide). La matière plastique peut être choisie parmi les thermoplastiques se déformant très peu dans la gamme de -40°C à 150°C. L'ouverture 4 est préférablement circulaire avec un diamètre D1 comme illustré dans les figures 1 et 2 mais d'autres formes géométriques peuvent être utilisées, par exemple avec une ouverture 4 de forme oblongue.

Bien entendu, le flasque supérieur et le flasque inférieur peuvent être différents l'un de l'autre. Ainsi dans des variantes, un seul flasque 3 peut présenter une ouverture 4, l'autre flasque fermant l'extrémité opposée de l'élément filtrant 1.

En référence aux figures 1 à 3, le flasque 3 présente :
- une portion tubulaire interne 3a,
- une portion tubulaire externe 3b qui est ici coaxiale à la portion tubulaire interne 3a,
- une portion radiale 3c formant le fond du flasque et reliée aux portions tubulaires 3a et 3b, et
- une portion d'étanchéité 35 annulaire reliée à la portion radiale 3c et agencée pour définir une lèvre d'étanchéité 6 qui s'étend ici vers l'axe central A.

Dans l'exemple représenté, la lèvre d'étanchéité 6 formée intégralement avec le flasque 3 est agencée radialement vers l'intérieur par rapport à la portion radiale 3c du flasque 3. De plus, cette lèvre 6 ne fait pas saillie axialement vers l'extérieur par rapport à la portion radiale 3c. Ainsi comme illustré à la figure 1, la portion d'étanchéité 35 du flasque 3 peut s'étendre dans le volume intérieur 5 du média filtrant 2.

Comme cela est visible sur la figure 1, la portion radiale 3c recouvre l'extrémité axiale 2a correspondante du média filtrant 2. Cette portion radiale 3c a ici une forme de disque avec un bord interne circulaire et un bord externe circulaire. On comprend que le média filtrant 2 est axialement maintenu entre les portions radiales 3c des flasques 3 supérieur et inférieur, tandis que les deux portions tubulaires 3a, 3b limitent la déformation radiale des extrémités axiales 2a du média filtrant 2.

Dans l'exemple représenté, la portion d'étanchéité 35 présente en section transversale une forme de U ouvert vers l'extérieur. En référence plus particulièrement à la figure 3, la portion d'étanchéité 35 présente une surface interne 34 qui prolonge une surface interne de la portion radiale 3c, et une surface externe 36 qui prolonge une surface externe de la portion radiale 3c. La surface interne 34 et la surface externe 36 se rejoignent au niveau d'un bord libre 37 qui peut être éventuellement radial.

La surface externe 36 de la portion d'étanchéité 35 s'étend de manière continue et présente donc en coupe transversale un profil en U. Ainsi suivant le profil en coupe transversale du flasque 3, comme illustré à la figure 3, la surface externe 36 présente trois portions 36a-36c en correspondance avec les segments 35a-35c de la portion d'étanchéité. On peut ainsi distinguer
- une portion de surface externe 36a définie au niveau de la première branche 35a de la portion d'étanchéité 35 à profil en forme de U ;
- une portion de surface externe 36b définie au niveau de la base 35b de la portion d'étanchéité 35 à profil en forme de U ; et
- une portion de surface externe 36c définie au niveau de la deuxième branche 35c de la portion d'étanchéité 35 à profil en forme de U.

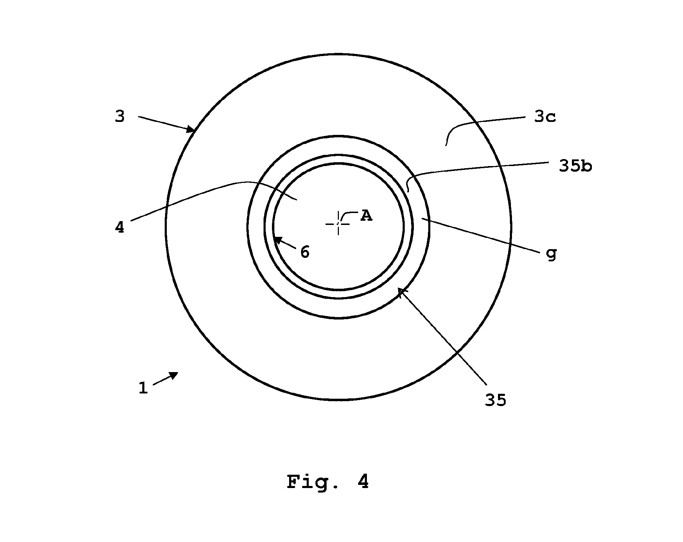

Les première et deuxième branches 35a, 35c sont ici généralement tubulaires en s'étendant suivant l'axe central A. Ainsi, les portions de surface externe 36a et 36c en vis-à-vis sont sensiblement parallèles l'une à l'autre et sont sensiblement coaxiales autour de l'axe central A. La surface externe 36 délimite alors une gorge annulaire g ouverte suivant l'axe central A et vers l'extérieur. La forme de la gorge g peut être ainsi circulaire ou de forme analogue, comme représenté dans l'exemple non limitatif de la figure 4. Une telle gorge g peut éventuellement avoir une profondeur supérieure à 2mm, et par exemple comprise entre 3 et 8 mm.

La première branche 35a qui permet de relier la portion d'étanchéité 35 à la portion radiale 3c peut présenter une épaisseur constante, qui est éventuellement identique à l'épaisseur de la portion radiale 3a. La deuxième branche 35c présente de préférence une épaisseur non constante, avec par exemple un amincissement au niveau de la jonction avec la base 35b. L'épaisseur de la base 35b de la portion d'étanchéité 35, par laquelle la deuxième branche 35c est reliée à la première branche 35a, est inférieure à la plus grande épaisseur de la deuxième branche 35c et peut aussi être inférieure à l'épaisseur de la portion radiale 3c. De cette façon, grâce à la flexion permise au niveau de la base 35b, la lèvre 6 formée par la portion d'étanchéité 35 présente une mobilité par rapport au reste du flasque 3. En particulier, la deuxième branche 35c est mobile à la fois axialement et radialement par rapport à la première branche 35a, ce qui facilite la connexion de l'élément filtrant 1 au reste du filtre. La deuxième branche 35c est éventuellement biseautée pour définir une rampe annulaire continue qui facilite l'insertion de l'organe tubulaire de connexion (qui est typiquement rigide) à travers l'ouverture 4 du flasque 3 lors du montage de l'élément filtrant 1. Dans l'exemple illustré, la base 35b présente du côté opposé à la gorge g un profil convexe pour former une partie inférieure arrondie de la portion d'étanchéité 35. La deuxième branche 35c présente également un profil convexe dans la zone d'amincissement, de façon à prolonger la partie inférieure arrondie.

En référence aux figures 1 et 2, le diamètre D1 de l'ouverture 4 est défini au niveau d'un bourrelet annulaire B formé sur la surface interne 34 de la portion d'étanchéité 35. Ce bourrelet annulaire B présente une surface d'étanchéité S continue qui délimite ladite ouverture 4. On peut voir sur la figure 1 que le diamètre D1 est inférieur au diamètre interne D2 du disque formé par la portion radiale 3c. De manière nullement limitative, le diamètre D1 peut représenter entre 60 et 90% du diamètre D2.

En référence à la figure 3, la surface interne 34 peut se décomposer en plusieurs surfaces 34a, 34b, 34c. Ici, le bourrelet B fait saillie sur la surface interne 34, au niveau de la surface 34a qui rejoint le bord libre 37. On peut voir que les surfaces 34a et 34b ont en coupe transversale un profil globalement convexe dans cet exemple. La surface 34c peut éventuellement s'étendre de manière perpendiculaire à la portion radiale 3c.

L'épaisseur de la portion d'étanchéité 35 augmente localement au niveau du bourrelet annulaire B. A titre d'exemple non limitatif, il est prévu une épaisseur E au niveau du bourrelet B avec une surépaisseur correspondant à une augmentation d'épaisseur comprise entre 20 et 50% par rapport au reste de la portion d'étanchéité 35 et éventuellement par rapport à une épaisseur du reste du flasque 3, mesurée dans la direction axiale. Ce surplus d'épaisseur permet d'accentuer le plaquage de la surface d'étanchéité S de la portion d'étanchéité 35 contre l'organe tubulaire de connexion du filtre. Du fait de la flexion de la portion d'étanchéité 35 qui se produit lors de l'engagement entre cet organe tubulaire de connexion et l'élément filtrant 1, le bourrelet annulaire B a tendance à être rappelé vers l'axe central A. Ainsi ce bourrelet B se plaque radialement de façon étanche, avec toute sa surface S, contre l'organe tubulaire de connexion qui a été inséré axialement dans le volume intérieur 5. Comme cela est visible sur la figure 3, la deuxième branche 35c peut être biseautée pour définir une rampe annulaire 6a continue. Cette forme biseautée depuis le bourrelet B facilite le montage de l'élément filtrant 1 en élargissant l'accès à l'ouverture 4.

Comme cela est bien visible sur les figures 1 à 3, les deux branches 35a et 35c sont sensiblement de même longueur et s'étendent parallèlement à l'axe central A. Ainsi, la deuxième branche 35c présente une extrémité qui arrive au niveau de la portion radiale 3c. La portion d'étanchéité 35 permet ainsi avec sa deuxième branche 35c (branche de contact) de positionner le média filtrant 2. Suivant la direction de l'axe central A, la longueur de la deuxième branche 35c peut représenter plus d'un cinquième de la hauteur du flasque 3.

En référence à la figure 1, l'élément filtrant 1 comporte un tube central 20 ou élément tubulaire analogue. Ce tube central (20) présente des ouvertures latérales pour permettre la circulation de liquide et est logé entièrement dans le volume intérieur 5 du média filtrant 2.

Le tube central 20 et le média filtrant 2 sont agencés de façon concentrique, avec le même axe central A perpendiculaire aux deux flasques 3. Une ou plusieurs nervures 21 sont formées extérieurement sur le tube central 20 pour le contact avec le média filtrant. La surface de contact est limitée mais est répartie sur la hauteur du média filtrant 2. Le tube central 20 est suffisamment rigide pour conférer une résistance mécanique au média filtrant 2, ce qui permet de supporter le flux de liquide filtré de façon centripète à travers le média filtrant 2. Le tube central 20 est par exemple en plastique ou dans une matière plus rigide. On comprend qu'un tube central 20 en plastique peut éventuellement être formé d'une seule pièce avec un des flasques 3 qui comporte ou non la lèvre d'étanchéité 6. Alternativement, au moins l'un des flasques 3 peut se fixer sur le tube central 20, par clipsage, encliquetage, vissage, un autre moyen d'assemblage adapté ou une combinaison de telles liaisons mécaniques.

Dans l'exemple représenté, des organes de clipsage 30 qui sont formés intégralement avec le flasque 3 font saillie de la face interne de la portion tubulaire interne 3a. Au niveau d'au moins une des ses extrémités axiales, le tube central 20 présente un bourrelet annulaire 22 qui fait saillie radialement vers l'extérieur. Le tube central 20 de la figure 1 est ainsi fixé par ses deux extrémités aux deux flasques 3. Le bourrelet annulaire 22 (ou autre projection saillante similaire) est engagé avec le flasque 3 correspondant, entre la base 35b de la portion d'étanchéité 35 et les organes de clipsage 30. Le bourrelet annulaire 22 est également en contact avec la paroi interne tubulaire 3a dans la zone intermédiaire entre les organes de clipsage et la base 35b, de sorte qu'un maintien fixe du tube central 20 est obtenu, sans possibilité de translation axiale ou de rotation de ce tube 20 à l'intérieur du volume 5.

Comme cela est visible sur la figure 2, une pluralité d'organes de clipsage 30, par exemple deux ou trois, peuvent être ainsi répartis sur la périphérie intérieure de la portion tubulaire interne 3a, de façon espacée axialement par rapport à la portion d'étanchéité 35. On comprend que la portion tubulaire interne 3a comporte ici la deuxième branche 35a de la portion d'étanchéité 35 et une extension tubulaire qui prolonge cette deuxième branche 35a pour permettre la fixation du tube central 20.

Bien que l'exemple représenté montre deux flasques 3 auxquels le tube central 20 est respectivement fixé pour permettre un maintien du média filtrant 2, on peut prévoir un ou deux flasques 3 uniquement liés au média filtrant 2 (par exemple par collage) sans que l'élément filtrant 1 ne comporte un tel tube central 20.

Il doit être évident pour les personnes versées dans l'art que la présente invention permet des modes de réalisation sous de nombreuses autres formes spécifiques sans l'éloigner du domaine d'application de l'invention comme revendiqué.

## Revendications

1. Elément filtrant (1) destiné à un filtre pour liquide de moteur à combustion, comprenant :
- un média filtrant (2) de forme annulaire qui s'étend autour d'un axe central (A) en définissant un volume intérieur (5) ; et
- au moins un flasque (3) monobloc en matière plastique comportant :
o une portion radiale (3c) qui recouvre une extrémité axiale (2a) du média filtrant (2), et
o une portion d'étanchéité annulaire (35) reliée à la portion radiale (3c) ;
**caractérisé en ce que** ladite portion d'étanchéité (35) s'étend entièrement dans ledit volume intérieur (5) du média filtrant (2),
**en ce que** ladite portion d'étanchéité (35) présente en section transversale une forme de U ouvert vers l'extérieur comportant une première branche (35a), une deuxième branche (35c) et une base (35b) reliant la première branche à la deuxième branche, la première branche (35a) et la deuxième branche (35c) étant globalement tubulaires et s'étendant suivant l'axe central (A), la portion d'étanchéité (35) étant reliée à la portion radiale (3c) par sa première branche (35a) ;
et **en ce que** la première branche (35a) s'étend le long de ladite extrémité axiale (2a) du média filtrant (2).

2. Elément filtrant selon la revendication 1, dans lequel la portion d'étanchéité (35) présente une lèvre d'étanchéité (6) qui est agencée radialement vers l'intérieur par rapport à la portion radiale (3c) du flasque (3).

3. Elément filtrant selon l'une quelconque des revendications précédentes, dans lequel la portion d'étanchéité (35) présente :
- une surface interne (34) qui définit une ouverture (4) d'un passage à travers l'élément filtrant (1) ; et
- une surface externe (36) délimitant une gorge annulaire (g) ouverte suivant l'axe central (A) et vers l'extérieur.

4. Elément filtrant selon la revendication 3, dans lequel la surface interne (34) de la portion d'étanchéité présente dans la deuxième branche (35c) un bourrelet annulaire (B) qui comporte une surface d'étanchéité délimitant ladite ouverture (4).

5. Elément filtrant selon la revendication 4, dans lequel l'épaisseur (E) de la portion d'étanchéité (35) au niveau du bourrelet annulaire (B) correspond à une augmentation d'épaisseur comprise entre 20 et 50% par rapport au reste de la portion d'étanchéité.

6. Elément filtrant selon l'une quelconque des revendications précédentes, dans lequel l'épaisseur de ladite base (35b) et la matière du flasque (3) sont choisies pour rendre flexible ladite base (35b), ce grâce à quoi la deuxième branche (35c) de la portion d'étanchéité (35) est mobile axialement et radialement par rapport à la première branche (35a).

7. Elément filtrant selon l'une quelconque des revendications précédentes, comprenant un tube central (20) avec des ouvertures latérales, agencé dans ledit volume intérieur (5) dans le prolongement de la portion d'étanchéité (35), ledit tube central (20) étant directement fixé au flasque (3).

8. Elément filtrant selon la revendication 7, dans lequel le tube central (20) présente un bourrelet annulaire (22) qui fait saillie radialement vers l'extérieur et est engagé avec le flasque (3) entre la base (35b) de la portion d'étanchéité (35) et des organes de clipsage (30) intégralement formés avec le flasque.

9. Elément filtrant selon l'une quelconque des revendications précédentes, dans lequel le flasque (3) est une pièce moulée qui comprend :
- ladite portion radiale (3c) qui s'étend perpendiculairement à l'axe central (A) du média filtrant (2), entre un bord interne et un bord externe, et forme le fond du flasque (3) ;
- une portion tubulaire interne (3a) qui s'étend le long de ladite extrémité axiale (2a) du média filtrant (2) recouverte par la portion radiale (3c), depuis le bord interne de la portion radiale, la portion tubulaire interne comprenant ladite deuxième branche (35a) de la portion d'étanchéité (35) ; et
- une portion tubulaire externe (3b) qui s'étend le long de ladite extrémité axiale (2a) du média filtrant (2) recouverte par la portion radiale (3c), depuis le bord externe de la portion radiale (3c).

10. Elément filtrant selon l'une quelconque des revendications précédentes, **caractérisé en ce que** la première branche (35a) qui permet de relier la portion d'étanchéité (35) à la portion radiale (3c) présente une épaisseur constante identique à l'épaisseur de la portion radiale (3a).

11. Elément filtrant selon l'une quelconque des revendications précédentes, dans lequel la deuxième branche (35c) présente une extrémité qui arrive au niveau de la portion radiale (3c).
